# EUROPEAN PATENT APPLICATION

(11) **EP 4 509 365 A1**
(43) Date of publication of application: **19.02.2025**
(21) Application number: 23788386.3
(22) Date of filing: 13.04.2023
(51) Int. Cl.: B60Q 7/00, G09F 7/18, G09F 13/16

(54) **STOP INDICATOR**

(30) Priority: 15.04.2022 JP 2022067604
(71) Applicant: Ryoei Co. Ltd., Niigata-shi, Niigata 950-0812 (JP)
(72) Inventor: SAITO Masatoshi, Niigata-shi, Niigata 950-0812 (JP)
(74) Representative: Schumacher & Willsau
(86) International application number: PCT/JP2023/014976
(87) International publication number: WO 2023/199968

(57) **Abstract**

[TASK] To provide a roadside hazard sign that can be placed on the road surface in a stable manner without the fear of being knocked over by wind, and can be folded up compactly when not in use.

[SOLUTION] The roadside hazard sign comprises a first base member (12) extending horizontally and fitted with a triangular display portion (14), a second base member (30) extending horizontally and rotatable between a retracted position where the second base member extends in a same direction as an extending direction of the first base member and a use position where the second base member extends orthogonally to the extending direction of the first base member, a pair of first leg members (34) connected to the respective ends of the first base member in a retractable manner, and a pair of second leg members (42) connected to the respective ends of the second base member in a retractable manner.

## Description

### TECHNICAL FIELD

The present invention relates to a roadside hazard sign.

### BACKGROUND ART

Roadside hazard signs are known in the art and are designed to be placed on the road surface near the vehicle that is parked on the roadside to notify the presence of the vehicle on the roadside. A roadside hazard sign is provided with a leg portion and a triangular frame portion that is put up on the leg portion, and is configured in such a manner that the leg portion and the triangular frame portion can be folded up for compact storage when not in use. (See Patent Document 1 and Patent Document 2, for instance.)

### PRIOR ART DOCUMENT(S)

### PATENT DOCUMENT(S)

Patent Document 1: JP2002-072935A
Patent Document 2: JP6257699B2

### SUMMARY OF THE INVENTION

### TASK TO BE ACCOMPLISHED BY THE INVENTION

A roadside hazard sign is required to be able to stand upright on the road surface in a stable manner without the fear of being knocked over by window, and folded up in a compact manner so as to be stored in a limited space such as the trunk of a vehicle when not in use.

In view of the above background, it is an object of the present invention to provide a roadside hazard sign that can be placed on the road surface in a stable manner without the fear of being knocked over by wind, and can be folded up compactly when not in use.

### MEANS TO ACCOMPLISH THE TASK

To achieve such an object, an aspect of the present invention provides a roadside hazard sign (10) having a triangular shape, comprising: a first base member (12) having a linear shape extending in a horizontal direction; a triangular display portion (14) extending upright from an upper surface of the first base member; a second base member (30) having a linear shape extending in the horizontal direction, and having a central part connected to a central part of the first base member so as to be rotatable around a vertical axial line between a retracted position where the second base member extends in a same direction as an extending direction of the first base member and a use position where the second base member extends orthogonally to the extending direction of the first base member; a pair of first leg members (34) each including a base end portion (35) connected to a corresponding end portion of the first base member so as to be rotatable around a horizontal axial line orthogonal to the first base member between a retracted position where the first leg member overlaps with the first base member and a use position where the first leg member depends downward from the first base member; and a pair of second leg members (42) each including a base end portion (43) connected to a corresponding end portion of the second base member so as to be rotatable around a horizontal axial line orthogonal to the second base member between a retracted position where the second leg member overlaps with the second base member and a use position where the second leg member projects outward from the end portion of the second base member.

According to this aspect, the roadside hazard sign can be placed on the road surface in a stable manner without the risk of being knocked over by wind, and can be folded up in a compact manner when not in use,

In this aspect of the present invention, preferably, each second leg member includes a linear main portion (42A) containing the base end portion and a grounding portion (42B) connected to a free end portion of the main portion so as to be resiliently deflectable relative to the main portion.

According to this aspect, the grounding portion of each second leg member can be at such an angle with respect to the main portion as to follow the slope of the road surface or the like. Thereby, the roadside hazard sign can be placed on the road surface in a stable manner when in use.

In this aspect of the present invention, preferably, each grounding portion is fitted with a first grounding sheet (44) made of elastomeric material.

According to this aspect, the stability of the roadside hazard sign placed on the road surface during use is further improved.

In this aspect of the present invention, preferably, a surface of each second leg member that faces downward in the retracted position thereof is fitted with a second grounding sheet (46) made of elastomeric material.

According to this aspect, when the roadside hazard sign is placed on the road with the second leg members in the retracted position, the stability of the roadside hazard sign on the road surface is improved.

In this aspect of the present invention, preferably, the second base member is formed by a bar member having a rectangular cross section, and each second leg member has a channel cross section configured to receive the second base member therein in the retracted position thereof.

According to this aspect, even though the second leg member has a channel cross section to improve rigidity, the second base member is prevented from being bulky in the retracted position.

In this aspect of the present invention, preferably, the second base member is provided with a slot (48) extending in an extending direction of the second base member, and each second leg member is provided with a shaft portion (40) configured to be received in the slot in a rotatable and slidable manner so that the second leg member comes to overlap with the second base member by a sliding movement of the second leg member along the extending direction of the second base member.

According to this aspect, the second leg members can be retracted compactly.

In this aspect of the present invention, preferably, the first leg members and the second leg members are configured such that each first leg member overlaps with the corresponding second leg member when the first leg member and the second leg member are in the retracted positions.

According to this aspect, the first leg members and the second leg members are retracted compactly.

In this aspect of the present invention, preferably, the roadside hazard sign further comprises a bottom member (16) attached to the first base member to form a bottom part of the triangular display portion, and a pair of hypotenuse members (24) each having a base end portion (23) connected to a corresponding end of the bottom member so as to be rotatable around a horizontal axial line orthogonal to the first base member between a retracted position where the hypotenuse member overlaps with the bottom member and a deployed position where the hypotenuse member forms a corresponding hypotenuse of the triangular display portion.

According to this aspect, the triangular display portion is retracted compactly.

### EFFECT OF THE INVENTION

The roadside hazard sign according to the foregoing aspects can thus be placed on the road surface in a stable manner without the fear of being knocked over by wind, and can be folded up compactly when not in use.

### BRIEF DESCRIPTION OF THE DRAWINGS

[Fig. 1] a perspective view of a roadside hazard sign according to a first embodiment of the present invention in the use position;
[Fig. 2] a front view of the roadside hazard sign of the first embodiment in the use position;
[Fig. 3] a side view of the roadside hazard sign of the first embodiment in the use position;
[Fig. 4] a front view of the roadside hazard sign of the first embodiment in the retracted position;
[Fig. 5] a side view of the roadside hazard sign of the first embodiment in the retracted position;
[Fig. 6A] a perspective view of a first leg member of the roadside hazard sign of the first embodiment in the retracted position;
[Fig. 6B] a perspective view of the first leg member of the roadside hazard sign of the first embodiment in the use position;
[Fig. 7] a perspective view showing a roadside hazard sign according to a second embodiment of the present invention in the use position;
[Fig. 8] a perspective view of the roadside hazard sign of the second embodiment with a first leg member and a second leg member thereof in the retracted positions;
[Fig. 9A] a diagram showing an engagement state between a guide slot and a sliding protrusion of the roadside hazard sign of the second embodiment when the second leg member is being drawn out;
[Fig. 9B] a diagram showing an engagement state between the guide slot and the sliding protrusion of the roadside hazard sign of the second embodiment when the second leg member is being deployed;
[Fig. 9C] a diagram showing an engagement state between the guide slot and the sliding protrusion of the roadside hazard sign of the second embodiment when the second leg member is being locked;
[Fig. 10A] a side view of the roadside hazard sign of the second embodiment showing the second leg members thereof in the retracted state;
[Fig. 10B] a side view of the roadside hazard sign of the second embodiment showing the second leg members thereof being deployed;
[Fig. 10C] a side view of the roadside hazard sign of the second embodiment showing the second leg members thereof in the use position; and
[Fig. 11] a perspective view of a roadside hazard sign according to a third embodiment of the present invention in the use position.

### DESCRIPTION OF THE PREFERRED EMBODIMENT(S)

### (Embodiment 1)

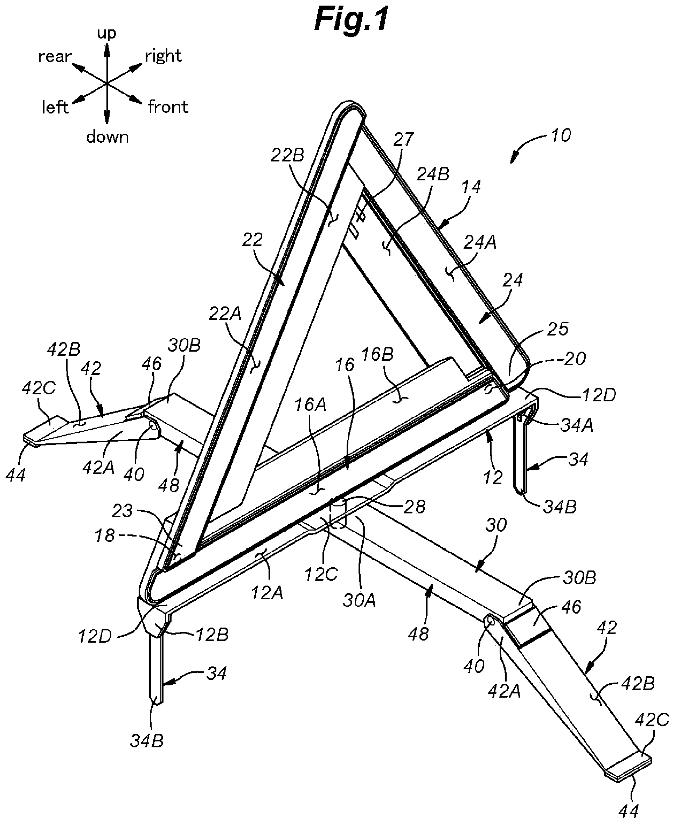

A roadside hazard sign according to a first embodiment of the present invention will be described in the following with reference to Figs. 1 to 6.

The roadside hazard sign 10 is provided with a first base member 12, which includes a linear main portion 12A extending laterally in the form of a flat bar and a pair of short pieces 12B depending perpendicularly from either lateral end 12D of the main portion 12A. The first base member 12 as well as other components of the roadside hazard sign 10 which will be described below may consist of molded plastic components.

A triangular display portion 14 extends upright from the main portion 12A of the first base member 12. The triangular display portion 14 includes a bottom member 16 that is fixed to the upper surface of the main portion 12A and extends laterally to form the bottom part of the triangular display portion 14 and a pair of hypotenuse members 22, 24 pivotally connected to the corresponding ends of the main portion 12A at the base end portions 23, 25 thereof via pin shafts 18, 20 so as to be rotatable around axial lines extending orthogonally to the main portion 12A in the fore and aft direction.

Each of the bottom member 16 and the two hypotenuse members 22 and 24 is provided with a light reflecting portion 16A, 22A, 24A placed thereon and extending along the length thereof and a fluorescent portions 16B, 22B, 24B extending along the inner edge of the corresponding light reflecting portion 16A, 22A, 24A. The left hypotenuse member 24 is positioned in front of the bottom member 16, and the right hypotenuse member 26 is positioned behind the bottom member 16.

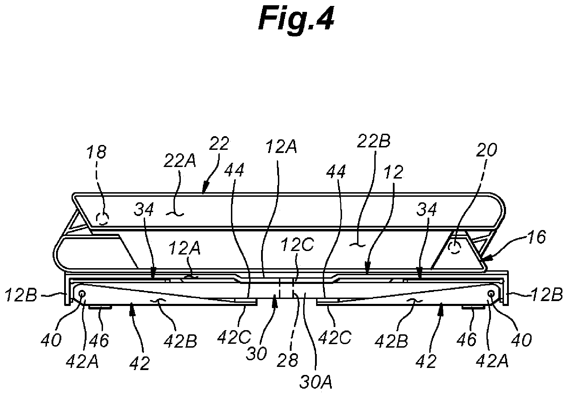

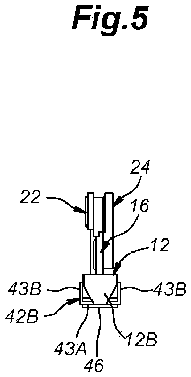

As shown in Figs. 4 and 5, the hypotenuse members 22 and 24 are rotatable around the central axial lines of the shaft portions 18 and 20, respectively, between a retracted position where the hypotenuse members 22 and 24 extend horizontally in alignment with the bottom member 16 by rotating around the axial lines of the shaft portions 18 and 20 relative to the bottom member 16 such that the light reflecting portions 22A and 24A overlap with each other one behind the other and the fluorescent portions 22B and 24B are positioned one behind the other with the fluorescent portions 16B of the bottom member 16 interposed therebetween as shown in Figs. 1 to 3, and a deployed position (use position) where the hypotenuse members 22 and 24 form a frame having a equilateral triangular shape in cooperation with the bottom member 16.

In other words, the hypotenuse members 22 and 24 can be selectively positioned in either one of the retracted position and the deployed position by the rotation of the hypotenuse members 22 and 24 around the central axial lines of the shaft portions 18 and 20 with respect to the bottom member 16.

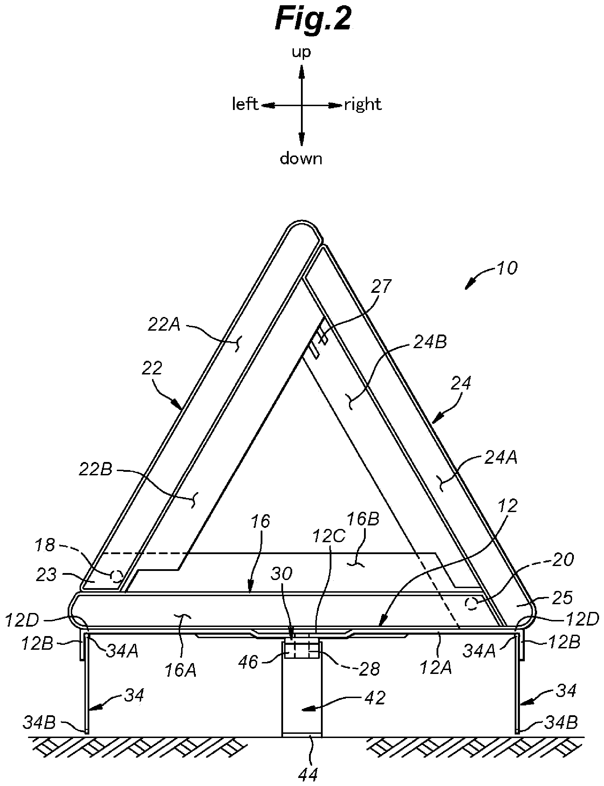

One of the hypotenuse members 24 is provided with a resilient locking piece 27 formed on the fluorescent portion 24B thereof. As shown in Fig. 2, the hypotenuse members 22 and 24 are caused to be retained at the deployed position by the resilient locking piece 27 detachably abutting on the inner edge of the fluorescent portion 22B of the other hypotenuse member 24.

A second base member 30 is provided under the main portion 12A of the first base member 12. The second base member 30 consists of a bar member having a rectangular cross section or a rectangular box-shaped cross section, and extends linearly in the horizontal direction. The second base member 30 is provided with a longitudinal center portion 30A which is rotatably connected to the longitudinal center portion 12C of the first base member 12 by a pin shaft portion 28 so as to be rotatable thereto around a vertical axial line. Thus, the first base member 12 and the second base member 30 are rotatably connected to each other by the vertical shaft portion 28 at the longitudinal center portions 12C, 30A thereof.

The second base member 30 is rotatable around the central axial line of the shaft portion 28 between a retracted position where the second base member 30 is rotated around the central axial line of the shaft portion 28 so as to overlap with the main portion 12A of the first base member 12 under the main portion 12A by extending in the same direction (lateral direction) as the extending direction of the main portion 12A as shown in Figs. 4 and 5, and a deployed position where the second base member 30 extends along the fore and aft direction orthogonally to the extending direction of the main portion 12A as shown in Figs. 1 to 3.

The first base member 12 and the second base member 30 have a substantially same longitudinal length. More specifically, the second base member 30 has a longitudinal length that does not exceed the longitudinal length of the main portion 12A of the first base member 12 or is slightly shorter than the longitudinal length of the main portion 12A of the first base member 12 so as not to protrude outward beyond the main portion 12A of the first base member 12 in the deployed position mentioned above. This ensures a compact state of the roadside hazard sign 10 when the second base member 30 is in the retracted position.

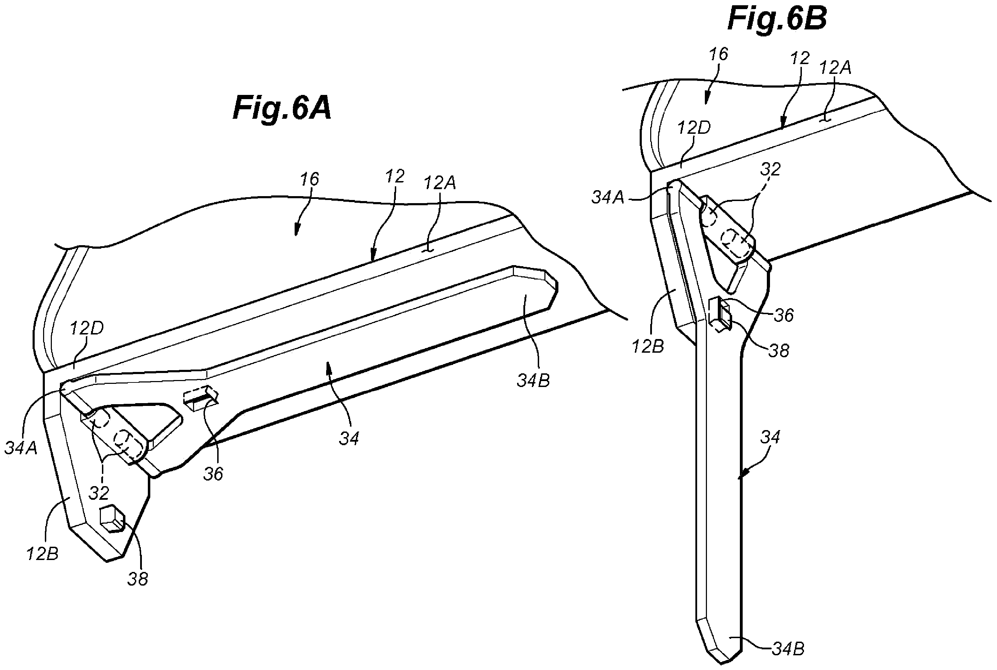

Each longitudinal end 12D of the main portion 12A of the first base member 12 is provided with a first leg member 34 having a base end portion 34A which is rotatably connected to the inner side of the corresponding short piece 12B via a pin shaft portion 32 (see Fig. 6) so as to be rotatable around a horizontal axial line extending in the fore and aft direction orthogonally to the main portion 12A.

Each first leg member 34 is rotatable around the central axial line of the shaft portion 32 between a retracted position where the first leg member 34 overlaps with the main portion 12A of the first base member 12 under the main portion 12A as shown in Fig. 6A and a use position where the first leg member 34 depends vertically from the corresponding end of the main portion 12A as shown in Fig. 6B. Thus, the first leg members 34 are fitted to the corresponding ends 12D of the first base member 12 in a retractable manner.

Each first leg member 34 is provided with an engagement hole 36. As shown in Fig. 6B, each first leg member 34 can be retained in the use position by the engagement hole 36 engaging a protrusion 38 formed in the short piece 12B.

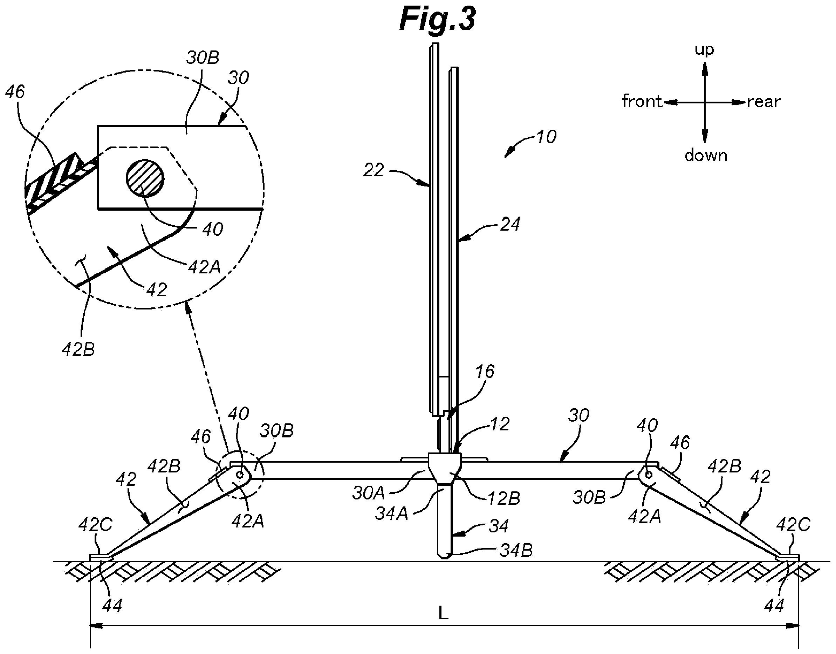

A second leg member 42 is provided at each longitudinal end portion 30B of the second base member 30. As shown in the fragmentary enlarged view of Fig. 3, each second leg member 42 includes a base end portion 42A which is rotatably connected to the second base member 30 around a horizontal axial line orthogonal to the second base member 30 via a pin shaft portion 40 received in a bearing hole 31 provided in the corresponding end portion 30B of the second base member 30. Thus, each second leg members 42 is fitted to the corresponding end portion 30B of the second base member 30 so as to be foldable.

Each second leg member 42 is rotatable around the central axial line of the shaft portion 40 between a retracted position where the second leg member 42 overlaps with the second base member 30 under the second base member 30 with the first leg member 34 in the retracted position interposed between the first leg member 34 and the second base member 30 as shown in Figs. 4 and 5, and a use position where the second leg member 42 projects outward from the corresponding end portion 30B of the second base member 30 as shown in Figs. 1 and 2.

As shown in the fragmentary enlarged view of Fig. 3, each second leg member 42 is configured to be held in the use position by the end surface of the base end portion 42A of the second leg member 42 coming into contact with the end surface of the end portion 30B of the second base member 30. Therefore, the second leg member 42 can be repeatedly maintained in the use position where the second leg member 42 is inclined obliquely downward and outward from the end portion 30B of the second base member 30. This stopper structure is also provided at the right end portion 30B of the second base member 30 when viewed in Fig. 3. As a result, the left and right second leg members 42 can be repeatedly maintained in the symmetrical use position as shown in Fig. 3.

Each first leg member 34 in the retracted position and the corresponding second leg member 42 in the retracted position vertically overlap with each other under the second base member 30 as shown in Fig. 4. In other words, each first leg member 34 and the corresponding second leg member 42 are stored one over the other under the second base member 30 in their respective retracted positions.

Each second leg member 42 is provided with a linear main portion 42B having a base end portion 42A and a grounding portion 42C connected to the main portion 42B on the side of the free end of the main portion 42B so as to be resiliently deflectable with respect to the main portion 42B. The main portion 42B has a channel cross section and includes a bottom wall 43A and pair of side walls 43B (see Fig. 5) extending upright from either side edge of the bottom wall 43A in such a manner than the second base member 30 is received inside this channel in the retracted position. Since each second leg member 42 has a channel cross section, the bending and torsional rigidity is improved compared to having a flat bar shape, and the wall thickness can be reduced and the leg length can be increased while ensuring the required mechanical strength. Moreover, since each second leg member 42 receives the corresponding second base member 30 in the retracted position, in spite of the channel cross section, the second leg member 42 is prevented from becoming bulky in the retracted position.

As shown in Fig. 3, the longitudinal lengths of the second leg members 42 are selected such that the two second leg members 42 have the same vertical length from the base end portion 42A to the grounding portion 42C on the side of the free end in the use position. This allows the second base member 30 to extend laterally parallel to the first base member 12 and the grounding surface of the second leg members 42 in the use position.

The vertical length of each first leg member 34 from the base end portion 34A to the grounding portion 34B on the free end side in the use position is slightly shorter than the vertical length of the second leg member 42. As a result, when the roadside hazard sign 10 is in use, as long as the second base member 30 is not deformed, a gap could be created between the grounding portion 34B of each first leg member 34 and the ground as shown in Figs. 2 and 3. In reality, the second base member 30 bends and twists due to the weight of the triangular display portion 14, wind pressure, and the like. The gap between the grounding portion 34B of each first leg member 34 and the ground surface is selected in such a manner that the gap is eliminated when the second base member 30 bends or twists.

Owing to this arrangement, the ground contact load of the first leg members 34 is smaller than the ground contact load of the second leg members 42 so that a most part of the load of the triangular display portion 14 is born by the second leg members 42. As a result, the loading of wind pressure born by the grounding portions 34B of the first leg members 34 is smaller than the loading born by the grounding portions 42C of the second leg members 42 so that the tendency of the roadside hazard sign 10 to slip sideways is minimized.

Each second leg member 42 has a linear main portion 42B including a base end portion 42A and a grounding portion 42C connected to a free end portion of the main portion 42B in a resiliently deflectable manner. A first grounding sheet 44 is attached to the grounding surface of the grounding portion 42C. A second grounding sheet 46 is attached to the surface of each second leg member 42 that faces downward in the retracted position. The first grounding sheets 44 and the second grounding sheets 46 are made of an elastomer material that has appropriate elasticity that follows the shape of the ground surface and has a large surface friction coefficient, preferably consisting of foam sheets made of an elastomer such as EPDM (ethylene propylene diene rubber).

The distance (span) between the two second leg members 42 in the use position increases from the base end portions 43 toward the grounding portions 42C, and reaches a maximum value L at the grounding portions 42C. Owing to this configuration, even though the longitudinal lengths of the first base member 12 and the second base member 30 are the same, the maximum value L of the spacing between the grounding portions 42C of the two second leg members 42 is longer than the longitudinal lengths of the first base member 12 and the second base member 30.

As a result, the roadside hazard sign 10 can be placed on the road surface in a more stable manner in the use position shown in Figs. 1 and 2 than in the case where the second leg members 42 are not provided, and is therefore less likely to be knocked over by wind.

The roadside hazard sign 10 is often exposed to wind in the front and back direction or the facing direction of the triangular display portion 14 during use. In such a situation, the roadside hazard sign 10 is highly effective in resisting the wind because the distance between the grounding portions 42C in the front and back direction is extended owing to the existence of the two second leg members 42 located front and rear in the use position. Furthermore, since the first grounding sheet 44 is attached to each grounding portion 42C, the stability of the roadside hazard sign 10 placed on the road surface during use is improved.

In addition, since the grounding portions 42C of the second leg members 42 are connected to the main portion 42B with a resilient flexibility, the grounding portions 42C can be deflected relative to the main portion 42B by an angle that conforms to the inclination of the road surface or the like. This also improves the stability of the roadside hazard sign 10 when placed on the road surface during use. Furthermore, since the grounding portions 42C can be bent toward and onto the second base member 30 in the retracted position, a highly compact retracted state can be achieved.

The roadside hazard sign 10 can also be placed on the road surface during use with the second leg members 42 in the retracted position where the second leg members 42 are folded up. In this mode of use, the second leg members 42 touch the road surface at the second grounding sheets 46. Even in this mode of use, the roadside hazard sign 10 can be placed on the road surface in a stable manner.

This mode of use of the roadside hazard sign 10 with the second leg members 42 folded up and kept in the retracted position is suitable for use on a flat road surface where the roadside hazard sign 10 can be placed on the road in a stable manner. On the other hand, the mode of use of the roadside hazard sign 10 where the second leg members 42 are deployed as shown in Figs. 1 to 3 is suitable for use on an irregular road surface.

Since the first leg members 34 and the second leg members 42, respectively, vertically overlapped with each other and folded onto the second base member 30, the presence of the first leg members 34 and the second leg members 42 does not impair the compactness of the roadside hazard sign 10 when not in use.

### (Embodiment 2)

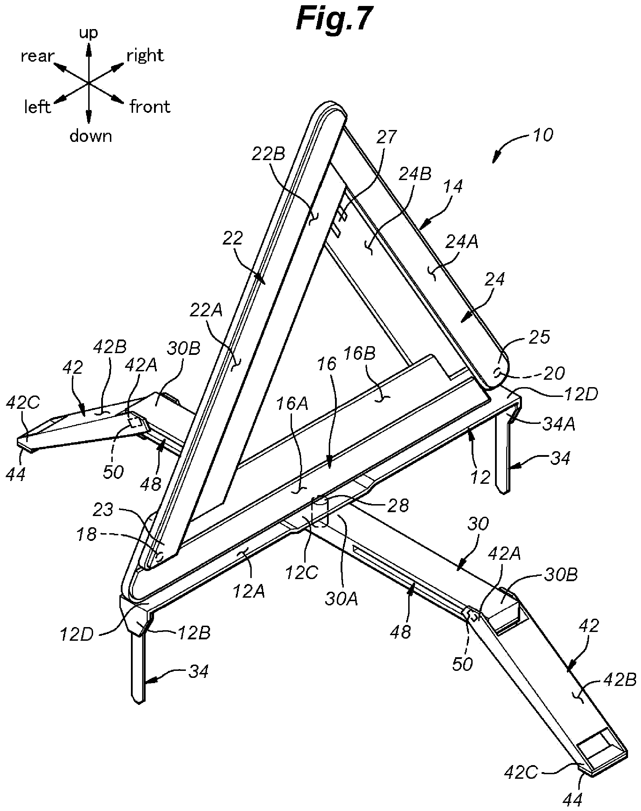

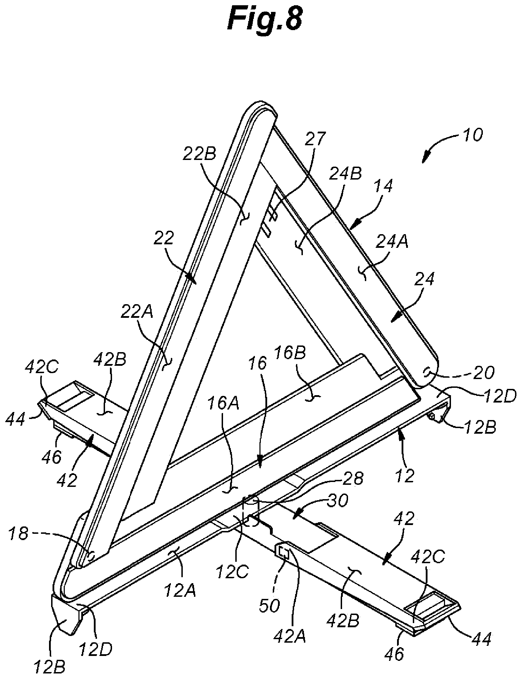

A roadside hazard sign 10 according to a second embodiment of the present invention will be described in the following with reference to Figs. 7 to 10. It should be noted that the parts in Figs. 7 to 10 corresponding to those in Figs. 1 to 6 are designated with the same reference numerals, and the description of such parts may be omitted in the following disclosure. The various components of the roadside hazard sign may consist of molded plastic members.

In the second embodiment, the second base member 30 is provided with a pair of guide slots 48 on either lateral side (the left side and the right side as seen in Fig. 7) of each longitudinal end portion (the front side and the rear side as seen in Fig. 7) of the second base member 30. The base end portion 42A of each second leg member 42 is provided with a pair of pieces opposing the side surfaces of the second base member 30 and provided with a pair of sliding protrusions 50 received in the corresponding guide slots 48.

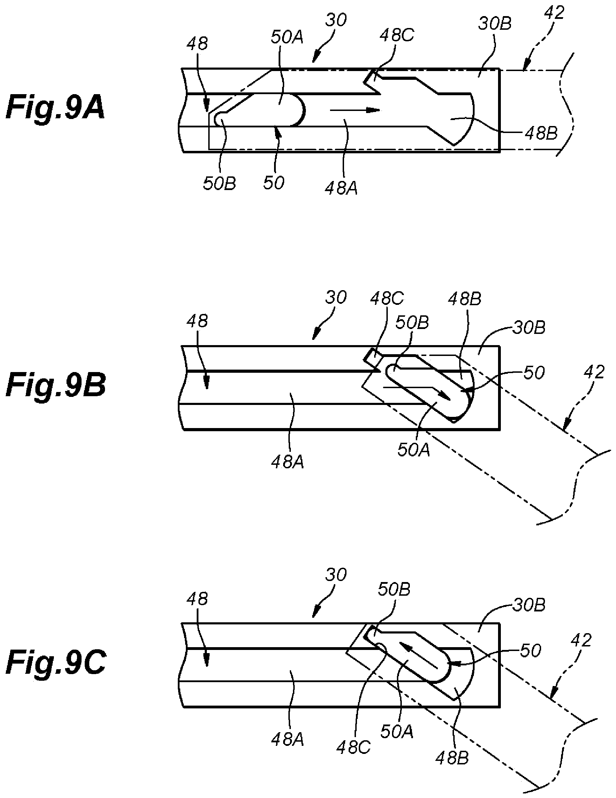

Details of the guide slots 48 and the sliding protrusions 50 will be described in the following with reference to Figs. 9A to 9C.

Each guide slot 48 extends in the extending direction of the second base member 30, and includes a linear guide portion 48A forming a most part of the guide slot 48, a rotation/inclination guide portion 48B connected to a terminal end of the linear guide portion 48A on the side of the end portion 30B of the second base member 30 and containing an obliquely downwardly extended portion, and a locking recess 48C containing an obliquely upwardly extended portion adjacent to the terminal end of the guide slot 48, all connected in a continuous manner.

Each sliding protrusion 50 includes a substantially rectangular sliding guide portion 50A that is slidably engaged by the linear guide portion 48A along the extending direction thereof so as to guide the movement of the second leg member 42 with respect to the second base member 30 along the longitudinal direction thereof, and a locking protrusion 50B that can advance into the locking recess 48C.

The sliding guide portion 50A of the sliding protrusion 50 slides along the linear guide portion 48A in the longitudinal direction toward the terminal end thereof as shown in Fig. 9A, the sliding protrusion 50 drops into the rotation/inclination guide portion 48B on account of the rotation of the second leg member 42 relative to the second base member 30 in an obliquely downward direction at the end portion of the linear guide portion 48A as shown in Fig. 9B, and the locking protrusion 50B advances into the locking recess 48C owing to an oblique upward movement of the second leg member 42 relative to the second base member 30 as shown in Fig. 9C. Once the locking protrusion 50B has advanced into the locking recess 48C, the second leg member 42 is locked in the use position where the second leg member 42 extends obliquely downward relative to the second base member 30.

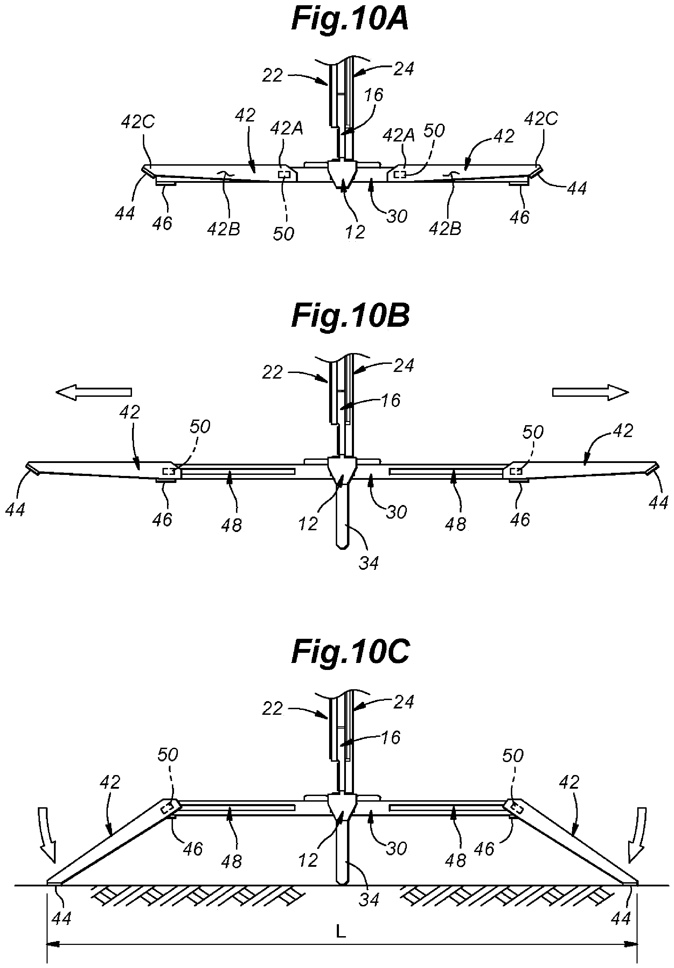

The mode of operation when a user moves the second leg member 42 from the retracted position to the use position will be discussed in the following with reference to Figs. 10A to 10C.

From the retracted position where each second leg member 42 is placed on top of the upper side of the second base member 30 in the retracted position thereof shown in Fig. 10A, the second leg member 42 is slidingly moved toward the end portion 30B of the second base member 30 along the extending direction thereof until the second leg member 42 is pulled out from the end portion of the second base member 30 as shown in Fig. 10B.

Once the second leg members 42 are fully pulled out, the second leg members 42 are rotated downward relative to the second base member 30 as shown in Fig. 10C, and thereafter the second leg members 42 are moved obliquely upward. As a result, the second leg members 42 are retained in the use position owing to the locked state shown in Fig. 10C. In the second embodiment also, the maximum value L of the distance between the grounding portions 42C of the two second leg members 42 is greater than the length of the second base member 30 in the longitudinal direction.

As a result, the roadside hazard sign 10 of the second embodiment, similarly to the roadside hazard sign 10 of the first embodiment, can be placed on the road surface in a more stable manner without the fear of falling down and is therefore more resistant against wind as compared to the case where the two second leg members 42 are not provided. Since the two second leg members 42 can be retracted in the second base member 30 so as to overlap therewith vertically, the compactness of the roadside hazard sign 10 when not in use is ensured in the case of the roadside hazard sign 10 of the second embodiment as well.

In the second embodiment, the second grounding sheet 46 is attached to the lower surface of each end of the second base member 30. When the roadside hazard sign 10 is used with each second leg member 42 retracted, each second grounding sheet 46 comes into contact with the road.

### (Embodiment 3)

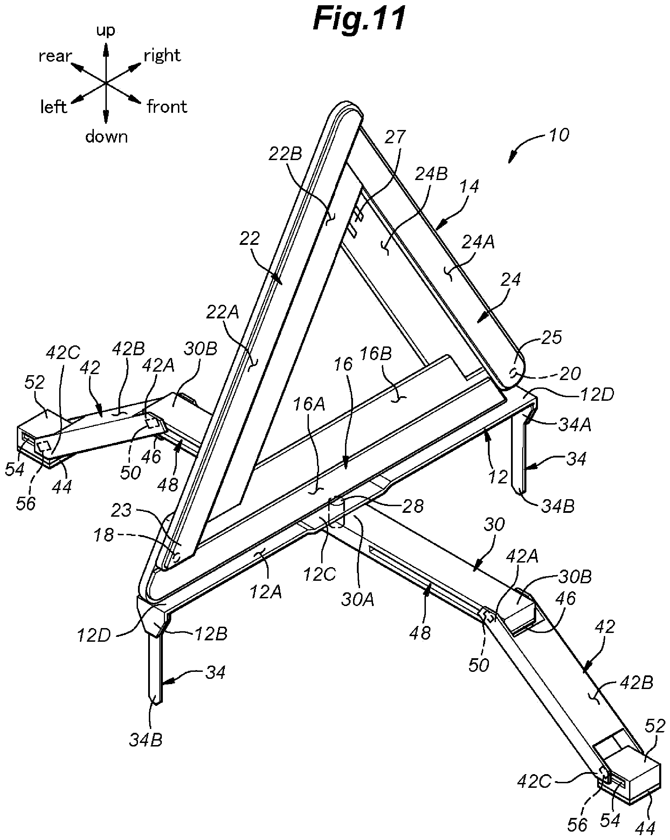

A roadside hazard sign 10 according to a third embodiment of the present invention will be described in the following with reference to Fig. 11. In Fig. 11, the parts corresponding to those in Fig. 7 are denoted with same reference numerals as those in Fig. 7, and the description of such parts may be omitted. The various components of the roadside hazard sign may consist of molded plastic members.

In the third embodiment, a rectangular parallelepiped-shaped grounding member 52 is attached to the grounding portion (free end) 42C of each second leg member 42 so as to be foldable and retractable. A pair of guide grooves 54 are formed on either side surface of each grounding member 52. Each grounding portion 42C is provided with a pair of sliding protrusions 56 that are engaged by the corresponding guide grooves 54.

The guide grooves 54 and the sliding protrusions 56 are substantially similar to the guide slots 48 and the sliding protrusions 50 of the second embodiment in shape and structure. Thereby, each grounding member 52 is movable between a use position where the grounding member 52 is deployed outward along the front and rear direction from the grounding portion 42C of the second leg member 42 in parallel with the second base member 30 and a retracted position where the grounding member 52 is moved inward along the longitudinal direction.

As a result, the maximum span of the front and rear grounding points of the roadside hazard sign 10 is further extended by the front and rear grounding members 52 in the use position so that the roadside hazard sign 10 is made even more resistant to being knocked over in the front and rear direction.

A first grounding sheet 44 may be attached to the bottom surface of each grounding member 52.

Although the present invention has been described in terms of preferred embodiments thereof, it is obvious to a person skilled in the art that various alterations and modifications are possible without departing from the scope of the present invention. For example, the stopper structure of the second leg members 42 of the first embodiment is not limited to the structure shown in the fragmentary enlarged view of Fig. 3, but may also be a structure using a stopper pin or the like, for example. The structure of the triangular display portion 14 is not limited to that of the illustrated embodiments, but may also be of various conventionally known structures.

**LIST OF REFERENCE NUMERALS**

| | | | |
|---|---|---|---|
| 10: | roadside hazard sign | 12: | first base member |
| 12A: | main portion | 12B: | short piece |
| 12D: | end portion | 14: | triangular display portion |
| 16: | bottom member | 16A: | light reflecting portion |
| 16B: | fluorescent portion | 18: | shaft portion |
| 20: | shaft portion | 22: | hypotenuse member |
| 22A: | reflective portion | 22B: | fluorescent portion |
| 22C: | extendable plate portion | 23: | base end portion |
| 24: | hypotenuse member | 24A: | reflective portion |
| 24B: | fluorescent portion | 25: | base end portion |
| 26: | hypotenuse member | 27: | locking piece |
| 28: | shaft portion | 30: | second base member |
| 30A: | central portion | 30B: | end portion |
| 31: | bearing hole | 32: | shaft portion |
| 33: | extension groove | 33A: | wall portion |
| 34: | first leg member | 34A: | base end portion |
| 34B: | grounding portion | 36: | engagement hole |
| 38: | projection | 40: | shaft portion |
| 40A: | locking protrusion | 42: | second leg member |
| 42A: | base end portion | 42B: | main portion |
| 42C: | grounding portion | 43: | base end portion |
| 43A: | bottom wall | 43B: | side wall |
| 44: | first grounding sheet | 46: | second grounding sheet |
| 48: | guide recess | 48A: | linear guide portion |
| 48B: | rotation/inclination guide portion | 48C: | locking recess |
| 50: | sliding protrusion | 50A: | sliding guide portion |
| 50B: | locking protrusion | 52: | grounding member |
| 54: | guide recess | 56: | sliding protrusion |

## Claims

1. A roadside hazard sign having a triangular shape, comprising:
a first base member having a linear shape extending in a horizontal direction;
a triangular display portion extending upright from an upper surface of the first base member;
a second base member having a linear shape extending in the horizontal direction, and having a central part connected to a central part of the first base member so as to be rotatable around a vertical axial line between a retracted position where the second base member extends in a same direction as an extending direction of the first base member and a use position where the second base member extends orthogonally to the extending direction of the first base member;
a pair of first leg members each including a base end portion connected to a corresponding end portion of the first base member so as to be rotatable around a horizontal axial line orthogonal to the first base member between a retracted position where the first leg member overlaps with the first base member and a use position where the first leg member depends downward from the first base member; and
a pair of second leg members each including a base end portion connected to a corresponding end portion of the second base member so as to be rotatable around a horizontal axial line orthogonal to the second base member between a retracted position where the second leg member overlaps with the second base member and a use position where the second leg member projects outward from the end portion of the second base member.

2. The roadside hazard sign according to claim 1, wherein each second leg member includes a linear main portion containing the base end portion and a grounding portion connected to a free end portion of the main portion so as to be resiliently deflectable relative to the main portion.

3. The roadside hazard sign according to claim 1 or 2, wherein each grounding portion is fitted with a first grounding sheet made of elastomeric material.

4. The roadside hazard sign according to claim 1 or 2, wherein a surface of each second leg member that faces downward in the retracted position thereof is fitted with a second grounding sheet made of elastomeric material.

5. The roadside hazard sign according to claim 1 or 2, wherein the second base member is formed by a bar member having a rectangular cross section, and each second leg member has a channel cross section configured to receive the second base member therein in the retracted position thereof.

6. The roadside hazard sign according to claim 1 or 2, wherein the second base member is provided with a slot extending in an extending direction of the second base member, and each second leg member is provided with a shaft portion configured to be received in the slot in a rotatable and slidable manner so that the second leg member comes to overlap with the second base member by a sliding movement of the second leg member along the extending direction of the second base member.

7. The roadside hazard sign according to claim 1 or 2, wherein the first leg members and the second leg members are configured such that each first leg member overlaps with the corresponding second leg member when the first leg member and the second leg member are in the retracted positions.

8. The roadside hazard sign according to claim 1 or 2, further comprising
a bottom member attached to the first base member to form a bottom part of the triangular display portion; and
a pair of hypotenuse members each having a base end portion connected to a corresponding end of the bottom member so as to be rotatable around a horizontal axial line orthogonal to the first base member between a retracted position where the hypotenuse member overlaps with the bottom member and a deployed position where the hypotenuse member forms a corresponding hypotenuse of the triangular display portion.
